# EUROPEAN PATENT APPLICATION

(11) **EP 1 361 733 A2**
(43) Date of publication of application: **12.11.2003**
(21) Application number: 03007361.3
(22) Date of filing: 01.04.2003
(51) Int. Cl.: H04M 1/725

(54) **Method for generating and distributing graphics for mobile communication terminals**

(30) Priority: 01.04.2002 KR 2002017865
(71) Applicant: SAMSUNG ELECTRONICS CO., LTD., Suwon-City, Kyungki-do (KR)
(72) Inventor: Youn, Su-Jung, Paldal-gu, Suwon-city, Kyungki-do (KR); Hwang, Byeong-Cheol, Paldal-gu, Suwon-city, Kyungki-do (KR); Kim, Bong-Hee, Paldal-gu, Suwon-city, Kyungki-do (KR); Ha, Jung-Mee, Paldal-gu, Suwon-city, Kyungki-do (KR); Kim, Sung-Jun, Paldal-gu, Suwon-city, Kyungki-do (KR); Choi, Hwan-Seog, Paldal-gu, Suwon-city, Kyungki-do (KR)
(74) Representative: Grünecker, Kinkeldey, Stockmair & Schwanhäusser Anwaltssozietät

(57) **Abstract**

Disclosed are a method for generating and providing graphics for use in a mobile communication terminal (115). The method enables the user to readily set a screen or image in the mobile communication terminal. A method for generating graphics to be provided to a mobile communication terminal configuring the user interface by combining different layers, includes the steps of: a) generating picture data corresponding to a specific layer of the user interface (206); b) determining the layer of the generated picture data and determining a location and a size of the picture data (208); and c) if the layer is determined, configuring the data to be displayed on the basis of a size and a location of the display area (210) and storing the data (212).

## Description

The present invention relates to a mobile communication terminal, a mobile communication system, a computer system, a method for generating and providing a user interface, and more particularly to a method for generating and providing a user interface for use in a mobile communication terminal.

Conventionally, a user interface was provided in order to provide users operating predetermined equipment with increased convenience in operating various control terminals, which are connected to a large scale computer system and carry out control operations. Moreover, as PCs (Personal Computers) are rapidly and more widely supplied, the users of the PCs share various information over the Internet and request an individualized user interface.

The PC can change the configuration of an animated character of an avatar concept on the basis of a user's taste through a current Internet system. The term "avatar" was derived from Sanskrit for "incarnation of a god" and is a combination of the Sanskrit word "ava" meaning "descent" and "terr", meaning "earth". The above-described avatar is popularized as an incarnation of a user on the Internet.

On the other hand, mobile communication terminals were developed for voice communications so that they can perform wireless voice communications. With the development of mobile communication technologies, the development of an SMS (Short Message Service) and a "1xEV-DO" system for a high data rate are proceeding rapidly. The standardization of a "1xEV-DV" system capable of providing one user with multiple services through multiple channels is now under way. The reason for the standardization and development of various services provided to mobile communication terminals and mobile communication systems is because users desire to use more various services.

The mobile communication terminals have developed to an advanced form from simple communications at the time of the initial development. There are various types of mobile communication terminals including, for example, a cellular phone, a PCS (Personal Communication Service) phone and a PDA (Personal Digital Assistant). The mobile communication terminal is configured to provide a function of carrying out quick dialling based on an assigned number according to a telephone number storage function, and also a function of receiving various information and various services over the Internet.

The users of the mobile communication terminals desire to use various user interfaces. That is, a method for variously showing a user's personality is needed. However, a method for a user interface in a current mobile communication terminal displays a current state of the terminal to a user through various icons in addition to numerals, Korean characters, English letters, special characters, etc., enables the user to input keys or a message consisting of Korean characters, English letters and special characters for short message transmission, provides icons of various menu options, and provides an initial screen and a termination screen containing a particular picture such as a moving picture or still picture.

Since such a picture is restrictedly used, it cannot satisfy all of a user's needs. Moreover, where the still picture or moving picture is displayed, it cannot readily be changed. For this reason, there is a disadvantage in that, if the user sets a screen or image in the mobile communication terminal, the set screen or image cannot readily be changed.

Therefore, it is the object of the present invention to provide a method for providing and generating a user interface to a mobile communication terminal or personal computer which can be more readily used, and a corresponding apparatus and system.

This object is solved by the subject matters of the independent claims.

Preferred embodiments are defined in the dependent claims.

In accordance with one aspect of the present invention, a method is provided for generating a user interface to be provided to a mobile communication terminal configuring the user interface by combining different layers, comprising the steps of: a) generating picture data corresponding to a specific layer of the user interface; b) determining the layer of the generated picture data and determining a location and a size of the picture data; and c) if the layer is determined, locating the generated picture data having a predetermined size in a corresponding location, transparently processing others except for the picture data, and storing the data.

In accordance with another aspect of the present invention, there is provided a method for providing a user interface to a personal computer or a mobile communication terminal in a system, which is connected to the personal computer through a data communication network, performs data communication with the mobile communication terminal through a connected mobile communication system, and includes a user interface database, the user interface being divided into layers, pieces of picture data of the layers existing in only preset display areas, other areas except for the preset display areas being transparently processed, the method comprising the steps of: a) if a connection of the mobile communication terminal is requested, providing data for user interface retrieval to a data channel coupled to the mobile communication terminal through the mobile communication system; and b) when a specific user interface contained in the database of the system is requested from the mobile communication terminal, generating and transmitting the user interface in the from of a message.

Preferably, the system may permit a connection by a registered terminal after determining whether the mobile communication terminal has been registered in the system, when the connection of the mobile communication terminal is requested. Preferably, the method may further comprise the step of: c) when the specific user interface contained in the database of the system is requested from the mobile communication terminal, charging a fee needed to use the database. Preferably, the system may transmit the user interface data to a corresponding mobile communication terminal when the user interface is requested from another mobile communication terminal.

Preferably, the method may further comprise the steps of: d) when a connection of the personal computer is requested, providing the data for the user interface retrieval through a network connected to the personal computer; e) when the specific user interface contained in the database of the system is requested from the personal computer and transmitted to the mobile communication terminal, generating the requested user interface in the form of a message and transmitting the user interface through the mobile communication system; and f) when the specific user interface contained in the database of the system is requested from the personal computer, and transmitted to the personal computer currently performing communication, generating the requested user interface in the form of a message and transmitting the user interface to the personal computer through the connected network. Preferably, the user interface transmitted to the mobile communication terminal may include layer indication information and display data.

The above features and other advantages of the present invention will be more clearly understood from the following detailed description taken in conjunction with the accompanying drawings, in which:
Fig. 1 is a view illustrating a system for providing a user interface to a mobile communication terminal through a communication network in accordance with the present invention;
Fig. 2 is a flow chart illustrating a control operation when the user interface is configured in a personal computer or an operator computer in accordance with an embodiment of the present invention;
Fig. 3A is a view explaining the case where data of respective layers are combined to configure one avatar;
Fig. 3B is a view illustrating display areas of respective layers for an avatar configuration in accordance with the present invention;
Figs. 4A to 4C are flow charts illustrating control operations when a predetermined terminal connected to a server computer downloads data in accordance with the present invention; and
Fig. 5 is a flow chart illustrating a control operation of an SMS (Short Message Service) center where the mobile communication terminal connected to a server through the SMS center receives data in accordance with the present invention.

Now, preferred embodiments of the present invention will be described in detail with reference to the annexed drawings. In the drawings, the same or similar elements are denoted by the same reference numerals even though they are depicted in different drawings.

Further, in the following description of the present invention, specific messages or signals will be described. However, those skilled in the art will appreciate that the specific messages or signals are described for illustrative purposes, and the present invention can also be implemented in various other manners. A detailed description of known functions and configurations incorporated herein will be omitted when they may obscure the subject matter of the present invention.

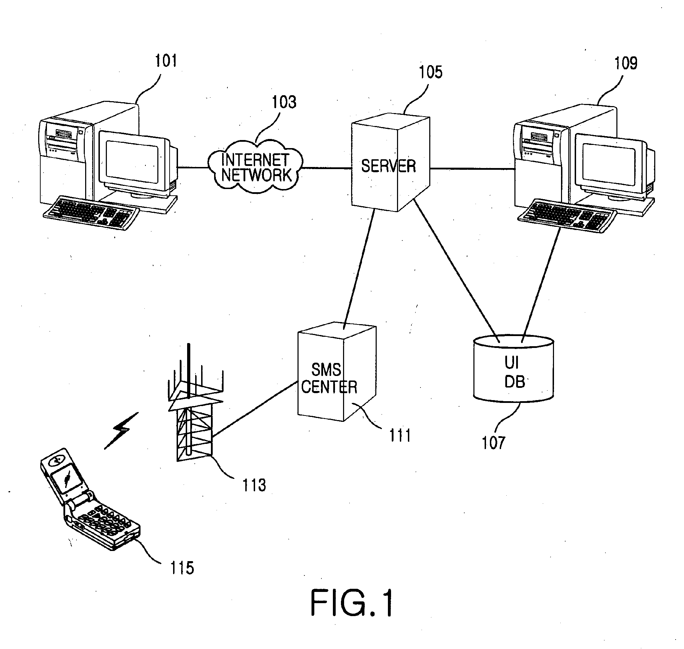

Fig. 1 is a view illustrating a configuration of a system for providing a user interface to a mobile communication terminal through a communication network in accordance with the present invention. A configuration of a communication network, its connection relationship, and its operation will be described in detail with reference to Fig. 1.

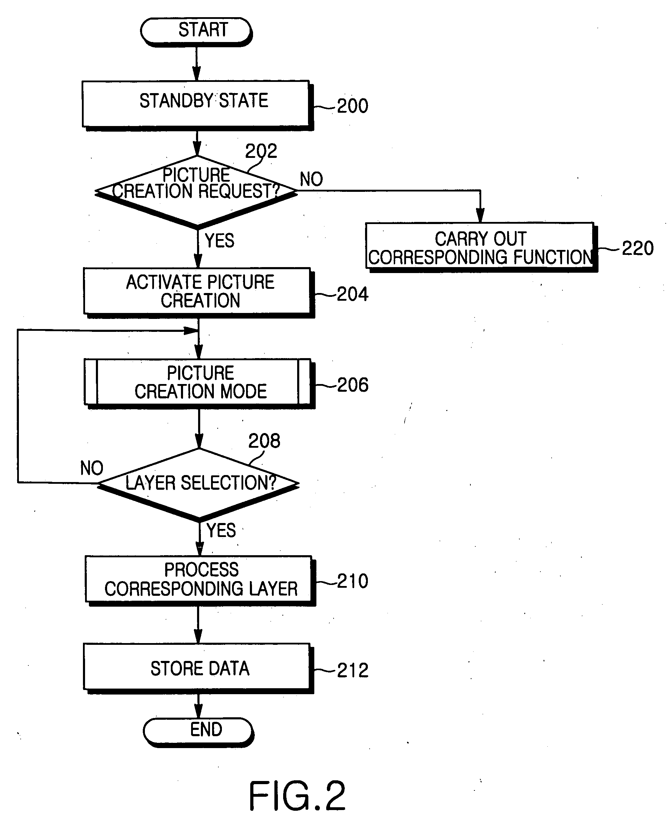

As shown in Fig. 1, a PC (Personal Computer) 101 is connected to an Internet network 103 through a wired line. A configuration in which the PC 101 is connected to the Internet network 103 through the wired line is shown in Fig. 1, but the PC 101 can be connected to a wireless network using a WLL (Wireless Local Loop), etc. The present invention is not limited to these configurations. The PC 101 is a conventional computer, and can generate user interface data to be provided to the mobile communication terminal in accordance with the present invention. The user interface data generated by the PC 101 in accordance with the present invention will be described with reference to a flow chart of Fig. 2.

Further, the PC 101 can be connected to a server 105 through the Internet network 103 in accordance with the present invention. Since a method for connecting the PC 101 to the server 105 through the Internet network 103 in accordance with the present invention is conventional, a detailed description of the conventional connection method will be omitted.

The server 105 is a system for providing a user interface of the mobile communication terminal in accordance with the present invention. The server 105 can be connected to a mobile communication network in order to communicate with the mobile communication terminal. As an embodiment, a configuration connected to an SMS (Short Message Service) center 111 is shown in Fig. 1. Further, as described above, the server 105 can be connected to the PC 101 through the Internet network 103. The server 105 can be coupled to a UI (User Interface) DB (DataBase) placed inside or outside of the server 105. In Fig. 1, the UI DB is separated from the server 105. The DB stores user interfaces to be provided to the mobile communication terminal. Pay data, free data and data generated by a general user can be stored.

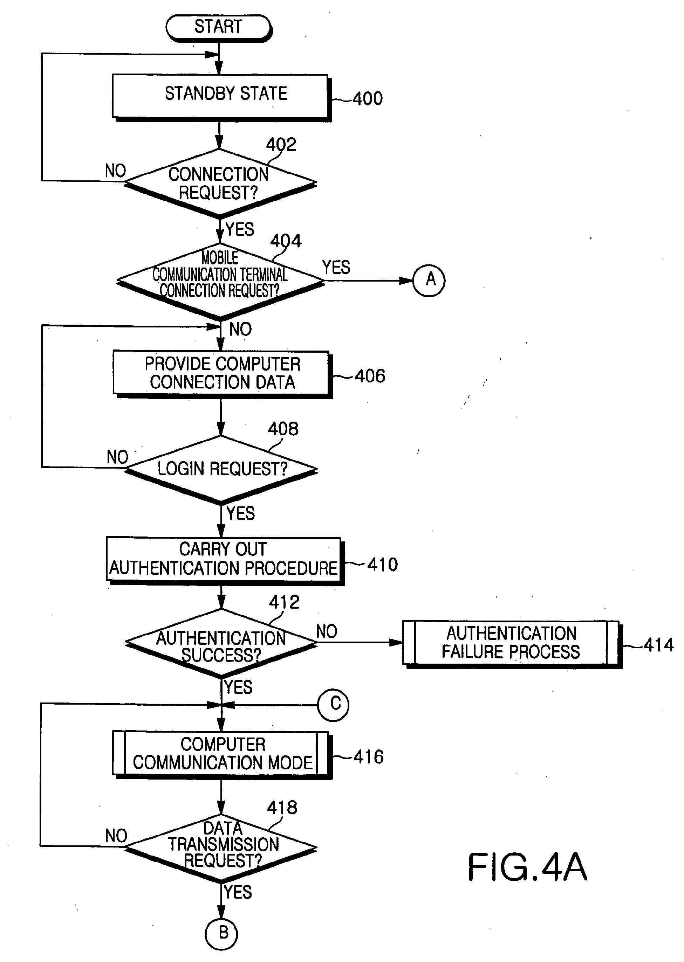

If the server 105 receives a user interface data request from the PC 101 or a mobile communication terminal 115, user interface data is transmitted to the PC 101 or the mobile communication terminal 115. Before the data is transmitted, an authentication procedure is performed to charge an appropriate fee to a user. The server 105 separately provides a data service for the mobile communication terminal 115 and a data service for the PC 101. The reason for differently providing the data services is because the PC 101 has large processing data capacity to provide data to a screen, but the mobile communication terminal 115 has small processable data capacity. Where the same data service is provided to the PC 101 and the mobile communication terminal 115, the mobile communication terminal 115 cannot appropriately display the data. This will be described in detail with reference to Figs. 4A to 4C to be described.

An operator computer 109 is an operator terminal connected to the server 105 and a UI DB 107, and provides data to the server 105 and the UI DB 107 or performs maintenance management. Further, the terminal 109 can generate the user interface data of the present invention as in the PC 109. This will be described with reference to the flow chart of Fig. 2 to be described.

The SMS center 111 is shown on the basis of the embodiment of the present invention. Any system capable of providing various data services from the server 105 to the mobile communication terminal 115 can be employed in place of the SMS center 111. Thus, the SMS center can actually be a switching system of a mobile communication system. Where the SMS center 111 receives a request for a connection from the mobile communication terminal to the server 105, it performs a connection to the server 105. Further, the SMS center 111 performs a function for processing data to be provided from the server 105 to the mobile communication terminal 115. Thus, the SMS center 111 is connected to a base station 113 in order to perform data communication with the mobile communication terminal 115 through a predetermined radio channel.

The base station 113 performs radio communication with the mobile communication terminal 115 through a predetermined channel. The communication as described in the embodiment of the present invention can be provided in the form of a short message, performed through a data channel of a 1xEV-DO system to be provided in the future, or performed through a specific channel of a 1xEV-DV system being currently standardized. Further, data service can be provided using a channel for data communication provided from a current system.

The mobile communication terminal 115 is a terminal having user interfaces, and includes various types of mobile communication terminals such as a cellular phone, a PCS (Personal Communication Service) phone, a PDA (Personal Digital Assistant) phone, etc. Any terminal capable of providing the user interfaces in the form of graphics can be employed in place of the mobile communication terminal 115.

Fig. 2 is a flow chart illustrating a control operation when the user interface is configured in a personal computer or an operator computer in accordance with an embodiment of the present invention. A procedure of controlling a configuration of the user interface in accordance with the present invention will be described with reference to Fig. 2. In describing the following embodiment, it is assumed that the above-described procedure is performed in the PC 101.

The PC 101 maintains a standby state at step 200. The standby state means a state when the PC 101 waits for an input of a signal for requesting a user key input and an execution of a specific program. If a predetermined event signal is generated, the PC 101 proceeds to step 202, and determines whether a creation of a picture of a user interface to be provided to the mobile communication terminal in accordance with the present invention is requested. If the creation of the picture is requested as a result of the determination at the above step 202, the PC 101 proceeds to step 204. Otherwise, the PC 101 proceeds to step 220, and performs a corresponding function.

At the above step 204, the PC 101 activates a picture creation program for the user interface. The PC 101 proceeds to step 206, and performs a picture creation mode. The picture creation mode at the above step 206 can be implemented by a method similar to or the same as a CAD (Computer-aided Design) program, a Visio program, a photo shop program, a picture board, etc., as a tool for drawing a picture provided in a conventional personal computer. The user scans and inputs a desired picture in the picture creation mode or directly creates picture data. If so, the PC 101 displays the created picture in the form of a graphic image using a display device such as a monitor, etc.

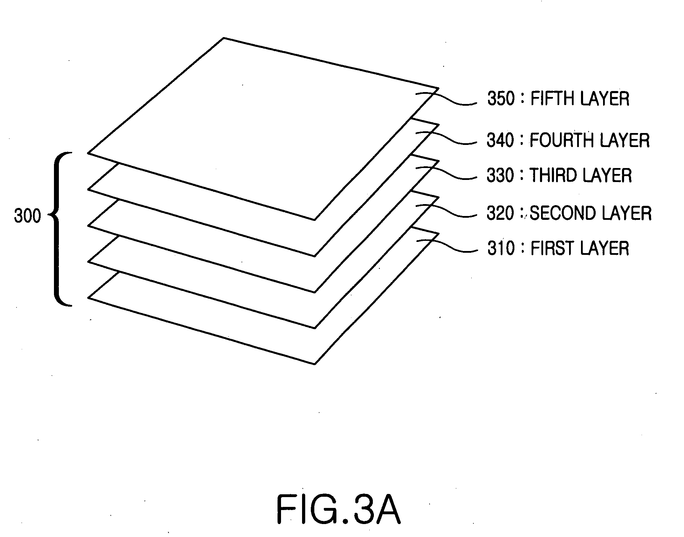

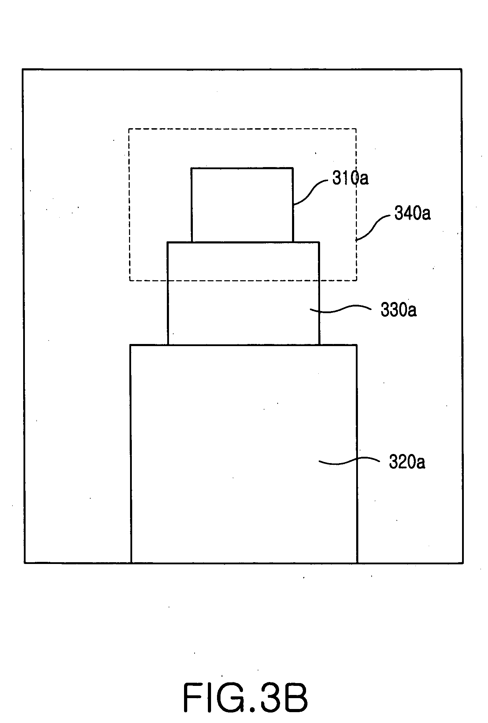

The PC 101 performs the picture creation described above, and then proceeds to step 208 to determine whether layers of data of the created picture are selected. If the layers are selected in the PC 101, the PC 101 proceeds to step 210. Otherwise, the,PC 101 continuously performs the above step 206. A description of the layers in accordance with the present invention will be described with reference to Figs. 3A and 3B.

Fig. 3A is a view explaining the case where pieces of data of respective layers are combined to configure one avatar; and Fig. 3B is a view illustrating display areas of respective layers for an avatar configuration in accordance with the present invention.

Referring to Fig. 3A, the user interface provided by the present invention is made up of a plurality of layers 310, 320, 330, 340 and 350. In the embodiment of the present invention, the five layers 310, 320, 330, 340 and 350 are shown in Fig. 3A. The layers 310, 320, 330, 340 and 350 have predetermined display areas. The display areas will be described with reference to Fig. 3B. In Fig. 3B, blocks 310a, 320a, 330a and 340a are areas in which data is displayed. That is, the layers 310, 320, 330, 340 and 350 are transparently processed in other, areas except for the display areas. The case where a human-shaped picture is inputted will be described with reference to the following Table 1.

**Table 1**

| Layer | Display data |
|---|---|
| First layer | Face style |
| Second layer | Pants style |
| Third layer | Jacket style |
| Fourth layer | Hair style |
| Fifth layer | Accessory style |

As shown in the above Table 1, respective layers have style display areas to complete one picture. Other areas except for the style display areas of the layers are transparently processed. When data exists in only an area 310a of Fig. 3B associated with the first layer 310, picture data provided as the user interface is face style data and other areas are transparently processed. Objects associated with the first layer 310 are similar to those associated with the second to fifth layers 320 to 350. Further, since the fifth layer corresponds to a display area 350a of the accessory style, it can be placed in any location. Thus, the display area of the accessory style is not shown in a specific location in Fig. 3B. Data associated with the fourth layer 340 is displayed in the display area 340a. The display area 340a of the fourth layer 340 is overlapped to the display area 310a of the face style associated with the first layer 310 and the display area 330a of the jacket style associated with the third layer 330. In the overlapped display area, data of the lower layer is covered. By configuring data as described above, one complete user interface can be divided into component parts. Further, a background style is not shown in the above Table 1, but data of the background style is placed in a lowest display area.

Again referring to Fig. 2, the layer selection at the above step 208 is performed as described above. If the PC 101 performs the layer selection at the above step 208, it proceeds to step 210 so that data to be displayed is configured on the basis of a size and a location of the display area. That is, a process of a corresponding layer is performed. If the process of the corresponding layer is completed, the PC 101 proceeds to step 212, and stores data based on the layer process. Through this procedure, the user interface to be provided to the mobile communication terminal is configured.

A procedure of uploading the data configured as described above to the server 105 is the same as a procedure of transferring the data to a predetermined server computer and storing the data in the conventional communication method. Accordingly, the procedure of uploading the data to the server 105 and storing the data will not be described.

Figs. 4A to 4C are flow charts illustrating a control operation when a predetermined terminal connected to a server computer downloads data in accordance with the present invention. Referring to Fig. 1 and Figs. 4A to 4C, the case where a specific terminal connected to the server 105 downloads user interface data will be described in detail.

The server 105 maintains a standby state at step 400. The standby state means a state when the server 105 waits for a connection of the specific terminal. The server 105 maintains the standby state at the above step 400, and then determines, at step 402, whether a connection request from the specific terminal is received. If the connection request from the specific terminal is received, the server 105 proceeds to step 404. Otherwise, the standby state at the above step 400 is continuously maintained.

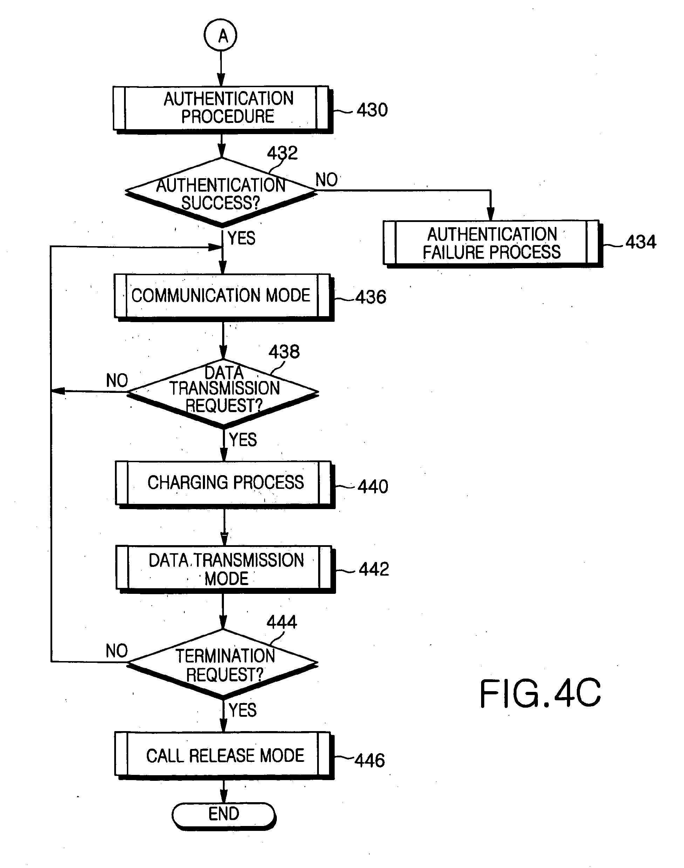

The server 105 proceeds to step 404, and determines whether the connection request of the terminal is the connection request of the mobile communication terminal. The connection requests of the mobile communication terminal 115 and the PC 101 can be identified through a network. The server 105 can receive characteristics of the connected terminal. If the server 105 receives the connection request from the mobile connection terminal, the server 105 proceeds to step 430 of Fig. 4C. Further, the server 105 receives the connection request from the PC 101, the server proceeds to step 406.

First, the case where the connection request is received from the PC 101, i.e., a procedure of the above step 406 after the above step 404 is performed, will be described. If the connection request is received from the PC 101, the server 105 proceeds to the above step 406, and then provides initial screen data when the PC 101 is connected to the server 105. The server 105 then proceeds to step 408, and determines whether a login request is received from the PC 101. The determination of the login request is performed by determining whether an ID and a password are received, or other logon procedure is performed. The server 105 performs an authentication procedure at step 410 if the login data is received. That is, it is determined whether the received login data is correct. After performing the authentication procedure at the above step 410, the server 105 determines, at step 412, whether the authentication has succeeded. That is, it is determined whether the ID has been registered and the password corresponding to the registered ID has been received. If the authentication has succeeded as a result of the determination, the server 105 proceeds to step 416. Otherwise, the server 105 proceeds to step 414, and performs a process corresponding to an authentication failure.

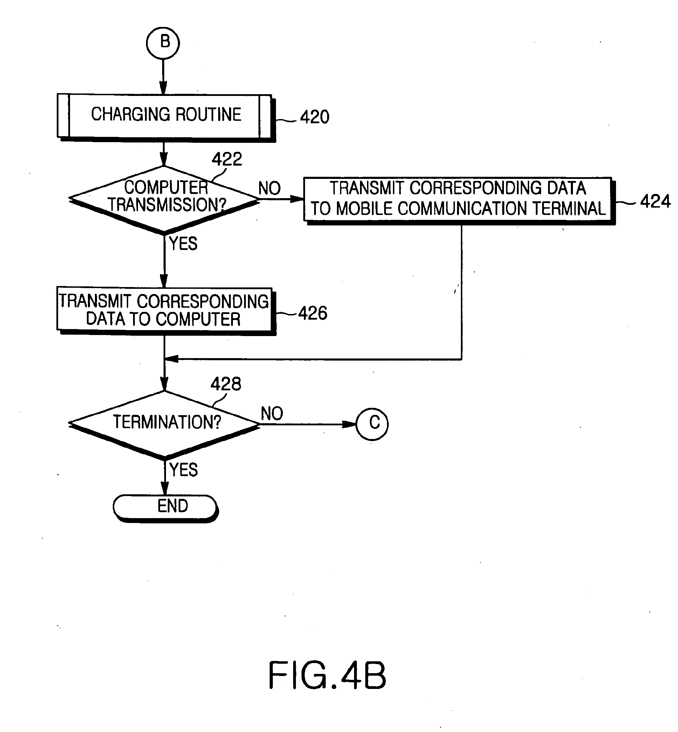

If the authentication has succeeded, the server 105 performs a computer communication mode at the above step 416. The computer communication mode means an operating mode for providing data service from the server 105. That is, a procedure of providing the user interface configured as shown in Fig. 2 or performing other data communication is carried out. The server 105 performs the computer communication mode, and then determines, at step 418, whether the transmission of the data generated through the procedure of Fig. 2 and stored in the UI DB 107 connected to the server 105 is requested. If the transmission of the data stored in the UI DB 107 is requested as a result of the determination, the server 105 proceeds to step 420 of Fig. 4B. Otherwise, the server 105 continuously performs the computer communication mode at the above step 416.

The server 105 proceeds to the above step 420, and carries out a charging routine. The charging routine carries out a charging process for pay data. The charging process is carried out on the basis of a cyber money payment, an actual online payment, etc. The charging process is not carried out for free data. If the charging process is completed, the server 105 proceeds to step 422, and determines whether the requested data should be transmitted to the connected computer. At the time of carrying out the charging routine, a procedure for selecting the terminal, i.e., the computer or the mobile communication terminal to which the data is transmitted, is performed.

If the data should be transmitted to the computer, the server 105 proceeds to step 426, and transmits corresponding data based on the charging routine to a corresponding computer through the Internet network 103. However, if the data is requested from the mobile communication terminal, the server 105 transmits a mobile communication terminal number and corresponding data to the SMS center 111 so that the data can be transmitted to the mobile communication terminal 115 by radio. At this time, the data transmitted from the server 105 is based on a data format shown in the following Table 2.

**Table 2**

| | |
|---|---|
| Layer indication information | Layer data |

The mobile communication terminal separately stores and uses the layer indication information and the layer data shown in the above Table 2 Where there are the five layers as shown in the above Table 1, the layer indication information should have at least three bits. That is, bit data corresponding to the first layer 310 is implemented as "000", bit data corresponding to the second layer 320 is implemented as "001", bit data corresponding to the third layer 330 is implemented as "010", bit data corresponding to the fourth layer 340 is implemented as "011", and bit data corresponding to the fifth layer 350 is implemented as "100".

After transmitting the data at the above step 424 or 426, the server 105 determines, at step 428, whether termination is requested. That is, it is determined whether the logout is requested. If the termination is requested, the server 105 performs a logout process for the computer. Otherwise, the server 105 continuously performs the computer communication mode at the above step 416.

Next, the case where the mobile communication terminal is connected to the server 105 as a result of the determination at the above step 404 will be described. At this time, the server 105 proceeds to the above step 430 after the above step 404. If the server 105 proceeds to the above step 430, the server 105 performs the authentication procedure for the connected mobile communication terminal. Here, the authentication procedure is optionally performed. The authentication procedure can be performed using the mobile communication terminal number received from the SMS center 111. The SMS center 111 and the server 105 transfer the terminal number of the mobile communication terminal to be connected at the time of signalling. At this time, a switching system can use a conventional No. 7 signalling system, and a signalling method at the time of a conventional wired data communication to transfer a telephone number of the mobile communication terminal. The present invention is not limited to these methods.

After performing the authentication at the above step 430, the server 105 proceeds to step 432 to determine whether the authentication has succeeded. If the authentication has succeeded as a result of the determination, the server 105 proceeds to step 436. Otherwise, the server 105 proceeds to step 434, and performs a process corresponding to the authentication failure. If the authentication has succeeded, the server 105 performs the communication mode at the above step 436. Here, the communication mode is different from the computer communication mode at the above step 416. That is, processing data capacity of the computer is relatively larger, while processing data capacity of the mobile communication terminal is relatively smaller. For this reason, the communication is performed through appropriate data conversion. The server 105 proceeds to step 438 to determine whether the data transmission of the user interface configured as shown in Fig. 2 is requested. If the data transmission is requested as a result of the determination, the server 105 proceeds to step 440. Otherwise, the communication mode of the above step 436 is continuously performed.

If the data transmission is requested, the server 105 performs the charging process at the above step 440. The charging process is based on a mobile communication fee of the mobile communication terminal. Further, the charging process can be achieved on the basis of the cyber money payment and the online payment. In the charging process, it can be determined whether the data should be transmitted to the mobile communication terminal at a current communication or whether the data should be transmitted to another communication terminal. If this procedure is completed, the server 105 proceeds to step 442, and transmits the data to the mobile communication terminal. The format of the data is based on the above Table 2. As described above, the mobile communication terminal receives the data to implement one complete user interface.

In accordance with the present invention, the data is stored in a data storage area of the mobile communication terminal as shown in the following Table 3.

**Table 3**

| Category | First storage area | Second storage area | ... |
|---|---|---|---|
| Face style layer | | | |
| Pants style layer | | | |
| Jacket style layer | | | |
| Hair style layer | | | |
| Accessory style layer | | | |

As shown in the above Table 3, the layers 310, 320, 330, 340 and 350 have a plurality of storage areas. Data are combined layer by layer. As shown in Figs. 3A and 3B, the complete user interface can be configured.

The server 105 performs a data transmission mode at step 442. If the data transmission is completed, the server 105 proceeds to step 444 to determine whether a termination request signal for a call connection release is received. If the termination request signal is received as a result of the determination, the server 105 proceeds to step 446 to perform a call release procedure. Otherwise, the server 105 continuously performs the communication mode at the above step 436. Here, the call release procedure is a procedure of requesting, to the SMS center 111, a release of a call connected to the mobile communication terminal. After the call release mode is performed, the routine is terminated.

As described above, the user interface for the mobile communication terminal created in the personal computer or the operator computer is transmitted from the server to another personal computer or the mobile communication terminal, and the user interface can be used on the basis of the user's needs. Further, where the data is transmitted to the personal computer, the personal computer can store corresponding data in the mobile communication terminal using a USB (Universal Serial Bus) port, etc. This method enables the user to implement a desired user interface in the mobile communication terminal.

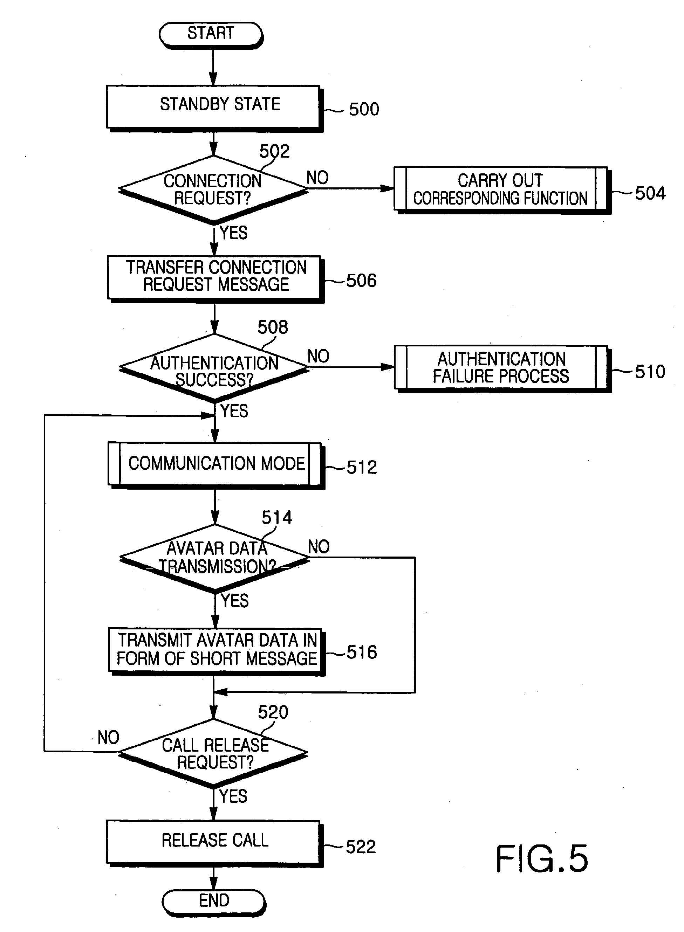

Fig. 5 is a flow chart illustrating a control operation of the SMS center where the mobile communication terminal connected to the server through the SMS center receives data in accordance with the present invention. A control operation when the mobile communication terminal of the present invention is connected to the server 105 through the SMS center 111 will be described in detail with reference to Figs. 1 to 5. In accordance with the present invention, the SMS center 111 can be the mobile communication switching system as described above.

The SMS center 111 maintains a standby state at step 500. Here, the standby state means a state when the SMS center 111 waits for a call connection. The SMS center 111 maintains the standby state at the above step 500, and then proceeds to step 502 if a predetermined event is generated. At this time, the SMS center 111 determines whether a message for requesting a connection to the server 105 from a specific mobile communication terminal has been received. If the connection request message has been received as a result of the determination, the SMS center 111 proceeds to step 506. Otherwise, the SMS center 111 performs a corresponding function at step 504.

The SMS center 111 proceeds to the above step 506, and the connection request message received from the mobile communication terminal and the telephone number of the mobile communication terminal contained in the connection request message are transferred to the server 105. The SMS center 111 proceeds to step 508, and determines whether an authentication success message has been received from the server 105. If the authentication success message has been received as a result of the determination, the SMS center 111 proceeds to step 512. Otherwise, the SMS center 111 performs a process corresponding to the authentication failure at step 510. The process corresponding to the authentication failure corresponds to a process of transferring an authentication failure message and a process of releasing a connected call.

Where the authentication has succeeded, the SMS center 111 proceeds to the above step 512 and performs the communication mode. Here, the communication mode means a process of forming a channel capable of communicating data with the mobile communication terminal through the base station 113 and transmitting and receiving the data between the server 105 and the mobile communication terminal 115. The SMS center 111 performs the communication mode, and proceeds to step 514 to determine whether an avatar data request is received from the mobile communication terminal. Here, the avatar is data necessary for configuring the user interface stored through the procedure of Fig. 2. If the avatar data request is received as a result of the determination, the SMS center 111 proceeds to step 516. Otherwise, the SMS center 111 proceeds to step 520. The SMS center 111 proceeds to the above step 516, and transmits the requested data in the form of a short message. An example of the short message has been described in the embodiment of the present invention, but the data can be transmitted by any method and channel capable of transmitting the data.

After transmitting the data, the SMS center 111 proceeds to the above step 520. If the SMS center 111 proceeds to the above step 520 after the above step 514 or 516, it determines whether a call release request signal is received from the server 105 or the mobile communication terminal. If the call release request signal is received as a result of the determination, the SMS center 111 proceeds to step 522 and releases the set call. However, if the call release request signal is not received, the SMS center 111 continuously performs the communication mode at the above step 512.

Through the above-described method, user interface data such as an avatar configured by respective layers stored in a server can be transmitted to a mobile communication terminal. Further, in the mobile communication terminal, a user can change the user interface if desired, and use the changed user interface.

As described above, the user interface such as the avatar can be provided to the mobile communication terminal through a predetermined server. Since components of the avatar data are configured on a layer basis, a person or a business enterprise can use a desired user interface.

It is also contemplated that a connection between a mobile terminal and a PC can be via hardware, such as a USB (Universal Serial Bus) connection. Information and data can be transferred between the mobile terminal and the PC in this, or other manners.

Although the preferred embodiments of the present invention have been disclosed for illustrative purposes, those skilled in the art will appreciate that various modifications, additions and substitutions are possible, without departing from the scope of the invention. Therefore, the present invention is not limited to the above-described embodiments, but the present invention is defined by the claims which follow, along with their full scope of equivalents.

## Claims

1. A method for generating a user interface by combining different layers, comprising the steps of:
a) generating picture data corresponding to a specific layer of the user interface;
b) determining the layer of the generated picture data and determining a location and a size of the picture data; and
c) if the layer is determined, locating the generated picture data having a predetermined size in a corresponding location, transparently processing other data except for the picture data, and storing the picture data.

2. A method for providing a user interface to a personal computer or a mobile communication terminal in a system, that is connected to the personal computer through a data communication network, performs data communication with the mobile communication terminal through a connected mobile communication system, and includes a user interface database, the user interface being divided into layers, picture data of the layers existing in only preset display areas, other areas except for the preset display areas being transparently processed, the method comprising the steps of:
a) if a connection of the mobile communication terminal is requested, providing data for user interface retrieval to a data channel coupled to the mobile communication terminal through the mobile communication system; and
b) when a specific user interface contained in the database of the system is requested from the mobile communication terminal, generating and transmitting the user interface in the from of a message.

3. The method as set forth in claim 2, wherein the transmitted user interface includes layer indication information and display data.

4. The method as set forth in claim 2 or 3, wherein the system permits a connection by a registered terminal after determining whether the mobile communication terminal has been registered in the system, when the connection of the mobile communication terminal is requested.

5. The method as set forth in one of claims 2 to 4, further comprising the step of:
c) when the specific user interface contained in the database of the system is requested from the mobile communication terminal, charging a fee to use the database.

6. The method as set forth in one of claims 2 to 5, wherein the system transmits the user interface data to a corresponding mobile communication terminal when the user interface is requested from another mobile communication terminal.

7. The method as set forth in one of claims 2 to 6, further comprising the steps of:
d) when a connection of the personal computer is requested, providing the data for the user interface retrieval through a network connected to the personal computer;
e) when the specific user interface contained in the database of the system is requested from the personal computer, and transmitted to the mobile communication terminal, generating the requested user interface in the form of a message and transmitting the user interface through the mobile communication system; and
f) when the specific user interface contained in the database of the system is requested from the personal computer and transmitted to the personal computer generating the requested user interface in the form of a message and transmitting the user interface to the personal computer through the data comminication network.

8. The method as set forth in claim 7, wherein the user interface transmitted to the mobile communication terminal includes layer indication information and display data.

9. A mobile communication terminal having a user interface generated and/or provided by the method according to one of claims 1 to 8.

10. A mobile communication system comprising a mobile communication terminal according to claim 9.

11. A computer system having a user interface generated and/or provided by the method according to one of claims 1 to 8.
